# EUROPÄISCHE PATENTSCHRIFT

(11) **EP 0 587 818 B1**
(45) Veröffentlichungstag und Bekanntmachung des Hinweises auf die Patenterteilung: **02.11.1994**
(21) Anmeldenummer: 92917465.4
(22) Anmeldetag: 25.05.1992
(51) Int. Cl.: F01P 7/04, H02P 7/48

(54) **LÜFTERAGGREGAT**
FAN INSTALLATION
ENSEMBLE VENTILATEUR

(30) Priorität: 03.06.1991 EP 91109043
(43) Veröffentlichungstag der Anmeldung: 23.03.1994
(73) Patentinhaber: SIEMENS AKTIENGESELLSCHAFT, 80333 München (DE)
(72) Erfinder: EISELE, Max, D-8520 Erlangen (DE)
(86) Internationale Anmeldenummer: EP9201174
(87) Internationale Veröffentlichungsnummer: WO9221866

(56) Entgegenhaltungen:
- EP-A- 0 171 245
- EP-A- 0 248 747
- FR-A- 1 315 778
- FR-A- 2 607 187
- US-A- 3 584 278

## Beschreibung

Die Erfindung betrifft ein Lüfteraggregat gemäß Oberbegriff des Anspruchs 1.

Um die Kühlwassertemperatur einer Verbrennungskraftmaschine (z.B. Dieselmotor) in einem engen Bereich (ca. 5 °C) konstant zu halten, muß die Luftmenge durch den Kühler und damit die Drehzahl des Ventilators veränderbar sein. Wegen seiner Robustheit werden zum Antrieb des Ventilators Drehstrom-Asynchronmotoren verwendet. Diese werden entweder aus einem Hilfsbetriebenetz versorgt oder von einem Drehstromgenerator gespeist, der von der zu kühlenden Verbrennungskraftmaschine angetrieben wird.

Bei dieselelektrischen Lokomotiven sind Lüfteraggregate gemäß dem Oberbegriff des Anspruchs 1 bekannt. Bei diesen Lüfteraggregaten sind gegebenenfalls mehrere polumschaltbare Asynchronmotoren vorgesehen. Die Luftmenge kann dann durch Zu- bzw. Abschalten von mehreren Ventilatoren und/ oder durch Polumschaltung des Lüfterantriebsmotors verändert werden. Bei z.B. drei zweistufigen Asynchronmotoren erhält man damit eine sechsstufige Drehzahlregelung. Aufgrund der Charakteristik des Dieselmotors und der unterschiedlichen Umgebungsbedingungen sind häufige Drehzahländerungen und damit Umschaltungen notwendig. Ein Lüfteraggregat, bei dem durch Polumschaltung eines zweistufigen Lüfterantriebsmotors eine stufige Regelung der Drehzahl erfolgt, ist durch die FR-A-2 607 187 bekannt. Innerhalb einer Stufe ist die Drehzahl des Ventilators weitgehend proportional zur Drehzahl des Verbrennungsmotors und damit proportional zur Frequenz des den Lüfterantriebsmotor speisenden Generators, der von der Verbrennungsmaschine angetrieben wird. Innerhalb einer Stufe ist eine stufenlose Regelung des Lüfterantriebsmotors nicht möglich.

Durch die US-A-3 584 278 ist eine Steuereinrichtung für Kräne bekannt, deren Charakteristik sehr verschieden ist von der eines Lüfterantriebs. So ist z.B. bei Kranantrieben die Leistung im wesentlichen proportional zur Drehzahl des Antriebsmotors, wohingegen bei Lüfterantrieben die Leistung proportional zur dritten Potenz der Drehzahl des Antriebsmotors ist.

Ferner sind Lüfteraggregate bekannt, bei denen der nichtpolumschaltbare Asynchronmotor über Umrichter gespeist wird. Damit kann zwar die Drehzahl kontinuierlich geregelt werden und damit die Kühlwassertemperatur in engen Grenzen gehalten sowie die häufigen Um- bzw. Zuschaltungen vermieden werden. Diese Lüfteraggregate sind allerdings sehr aufwendig.

Aufgabe der vorliegenden Erfindung ist es, ein Lüfteraggregat zu schaffen, bei dem die Drehzahl des Ventilators und damit die Luftmenge auf einfache Weise, insbesondere mit möglichst wenigen Um- bzw. Zuschaltungen, an die abzuführende Wärmemenge angepaßt werden kann.

Die Aufgabe wird erfindungsgemäß durch die im Kennzeichen des Anspruchs 1 angegebenen Merkmale gelöst. Vorteilhafte Ausgestaltungen der Erfindung sind in den Ansprüchen 2 bis 10 beschrieben.

Bei dem erfindungsgemäßen Lüfteraggregat ist als Antriebsmotor für den Ventilator ein polumschaltbarer Asynchronmotor vorgesehen. Der Antriebsmotor ist in einem vorgebbaren Drehzahlbereich über die Regelung der Spannung kontinuierlich in seiner Drehzahl einstellbar.

Die innerhalb des Gesamtdrehzahlbereichs des Antriebsmotors frei wählbaren Drehzahlbereiche sind vorzugsweise gemäß Anspruch 3 aufgeteilt. Der Antriebsmotor wird dann in der hohen Leistungsstufe (niedrige Polzahl), d.h. im oberen Drehzahlbereich, mit einer frequenzproportionalen Spannung versorgt. In der niedrigeren Leistungsstufe (höhere Polzahl) wird die Drehzahl des Antriebsmotors über die Spannung kontinuierlich verändert. Durch Absenken der Spannung unter den Nennwert wird der Schlupf des Asynchronmotors erhöht. Damit sinkt die Drehzahl des Ventilators unter die Nenndrehzahl der höheren Polzahl und die abgeführte Luftmenge erniedrigt sich entsprechend. Die Drehzahl des Ventilators kann somit auf konstruktiv einfache Weise über einen großen Bereich, z.B. 0-75 %, kontinuierlich an die abzuführende Wärmemenge angepaßt werden. Lediglich im oberen Drehzahlbereich erfolgt eine stufige Anpassung der Motordrehzahl und damit der Drehzahl des Ventilators.

Zur Drehzahlregelung des Antriebsmotors sind verschiedene Regeleinrichtungen denkbar. So kann die Regeleinrichtung z.B. als Umrichter ausgebildet sein. Eine derartige Ausführungsform wäre jedoch relativ teuer. Wesentlich kostengünstiger ist eine Ausbildung des Lüfteraggregats gemäß einem der Ansprüche 4 bis 10.

Werden die polumschaltbaren Asynchronmotoren des Lüfteraggregats von einem Hilfsbetriebenetz versorgt, dann ist eine Ausführungsform gemäß Anspruch 4 besonders vorteilhaft. In der schnellen Drehzahlstufe wird der Asynchronmotor direkt aus dem Hilfsbetriebenetz gespeist. In der langsameren Drehzahlstufe wird die Drehzahl des Antriebsmotors durch eine Spannungsabsenkung der einzelnen Phasen mittels eines Spannungsstellers eingestellt. Der Spannungssteller kann z.B. aus steuerbaren Halbleiter-Elementen bestehen. Vorzugsweise sind diese Halbleiter-Elemente als Thyristoren, die mit Phasenanschnittsteuerung arbeiten, oder als Transistoren ausgebildet. Ein Lüfteraggregat gemäß Anspruch 4 bietet den Vorteil, daß selbst bei mehreren Ventilatoren die jeweiligen Antriebsmotoren dann keine weiteren Spannungssteller mehr benötigen. Die weiteren Antriebsmotoren werden in der schnellen oder langsamen Drehzahlstufe betrieben oder sind abgeschaltet. Das Hilfsbetriebenetz kann von einem Generator oder einer anderen Hilfsbetriebeversorgung entweder mit konstanter Spannung und Frequenz oder bei variabler Frequenz mit einer frequenzproportionalen Spannung versorgt werden.

Ein Lüfteraggregat gemäß Anspruch 5 ist insbesondere für Hilfsbetriebenetze mit variabler Frequenz geeignet, bei denen die Spannung nicht oder nur sehr eingeschränkt verstellt werden kann. Durch den Spannungssteller wird im oberen Drehzahlbereich ebenfalls eine Spannungsabsenkung erzielt. Damit erhält man dann in diesem Bereich die gewünschte frequenzproportionale Spannung.

Ein Lüfteraggregat gemäß Anspruch 8 ist besonders kostengünstig für Anwendungsfälle, bei denen der Antriebsmotor des Ventilators von einem Hilfsgenerator gespeist wird, der von einem Dieselmotor mit variabler Drehzahl angetrieben wird. Der Erregerstrom des Synchrongenerators wird hierbei so geregelt, daß sich in der schnellen Drehzahlstufe des Ventilators die Spannung proportional mit der Generatorfrequenz erniedrigt und in der langsameren Drehzahlstufe die Spannung über den Erregerstrom soweit abgesenkt wird, daß sich die gewünschte Lüfterdrehzahl einstellt.

Das erfindungsgemäße Lüfteraggregat ist nicht nur auf den bei Kühlern von dieselelektrischen Lokomotiven beschriebenen Verwendungszweck beschränkt. Vielmehr ist das Lüfteraggregat auch für andere Einsatzgebiete geeignet, bei denen die abzuführende Wärmemenge und/oder die Kühllufttemperatur stark variieren können, wie z.B. bei stationären Dieselgenerator- Anlagen.

Bei einem Lüfteraggregat gemäß Anspruch 9 ergibt sich wegen der niedrigeren Rotorverluste eine günstige Baugröße. Dabei wird das Verhältnis der niedrigen zur höheren Polzahl am günstigsten zwischen 0,4 bis 0,8 gewählt.

Falls die maximale Frequenz, mit der der Asynchronmotor betrieben werden kann, nicht mit der üblichen Industriefrequenz von 50 oder 60 Hz übereinstimmt, dann erleichtert es die Wartung, wenn die Spannung des Motors so gewählt wird, daß sie bei Industriefrequenz der dazugehörigen Netzspannung entspricht.

Weitere Vorteile und Einzelheiten der Erfindung ergeben sich aus der nachfolgenden Beschreibung von Ausführungsbeispielen anhand der Zeichnung und in Verbindung mit den Ansprüchen 2 bis 10. Es zeigen:
- FIG 1: ein Prinzip-Schaltbild einer ersten Ausführungsform des erfindungsgemäßen Lüfteraggregats, wobei der Antriebsmotor direkt aus einem Hilfsbetriebenetz gespeist wird,
- FIG 2: ein Prinzip-Schaltbild einer zweiten Ausführungsform des erfindungsgemäßen Lüfteraggregats, wobei der Antriebsmotor von einem Hilfsbetriebenetz mit variabler Frequenz gespeist wird,
- FIG 3: ein Prinzip-Schaltbild einer weiteren Ausführungsform des erfindungsgemäßen Lüfteraggregats, wobei der Antriebsmotor von einem eigenen Generator gespeist wird.

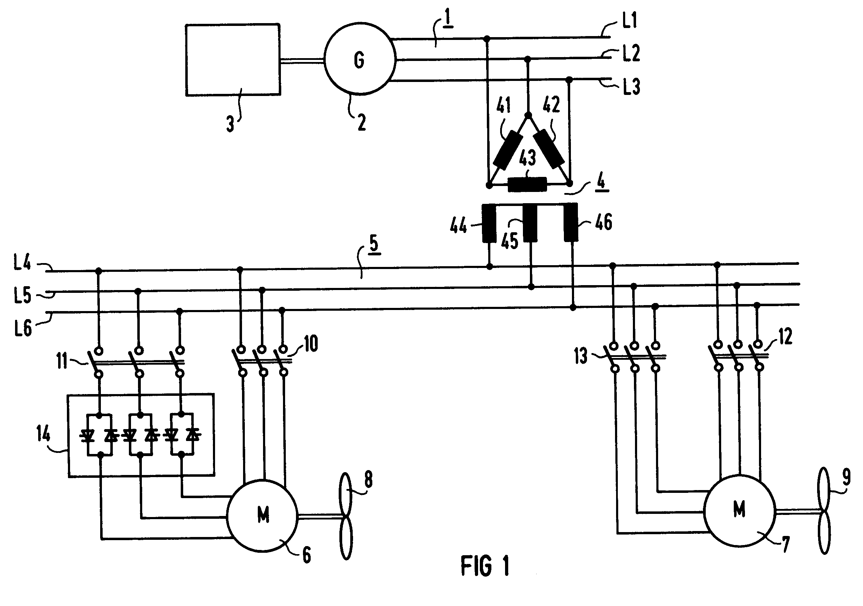

In FIG 1 ist mit 1 ein dreiphasiges Bordnetz eines dieselelektrischen Antriebs bezeichnet. Das Bordnetz wird von einem Generator 2 gespeist, der von einem zu kühlenden Dieselmotor 3 angetrieben wird.

An die Leiter L1,L2,L3 des Bordnetzes 1 ist ein Transformator 4 mit seinen Primärwicklungen 41,42,43 gelegt. Die Sekundärwicklungen 44,45,46 des Transformators 4 sind an die Leiter L4,L5,L6 eines Hilfsbetriebenetzes 5 geschaltet. Das Hilfsbetriebenetz 5 kann über den Transformator 4 von dem Generator 2 mit konstanter Spannung und Frequenz oder mit einer frequenzproportionalen Spannung mitversorgt werden.

Die Primärwicklungen 41,42,43 sind im dargestellten Ausführungsbeispiel in Dreieck und die Sekundärwicklungen 44,45, 46 in Stern geschaltet. Durch den Transformator 4 erfolgt sowohl die Spannungsanpassung als auch die Potentialtrennung zwischen dem Bordnetz 1 und dem Hilfsbetriebenetz 5. An das Bordnetz 1 sind weitere in FIG 1 nicht dargestellte Verbraucher, wie z.B. Traktionsumrichter mit nachgeschalteten Fahrmotoren, angeschlossen.

An die Leiter L4,L5,L6 des Hilfsbetriebenetzes 5 sind Antriebsmotoren 6,7 für Ventilatoren 8,9 angeschlossen. Bei den Antriebsmotoren 6,7 handelt es sich im dargestellten Ausführungsbeispiel um polumschaltbare, zweistufige Asynchronmotoren, dessen Pole jeweils über zwei Schalter 10,11 bzw.12, 13 an die Leiter L4,L5,L6 des Hilfsbetriebenetztes 5 schaltbar sind.

Im oberen Drehzahlbereich (schnelle Drehzahlstufe, niedrige Polzahl) ist der Schalter 10 geschlossen und der Asynchronmotor 6 wird direkt aus dem Hilfsbetriebenetz 5 gespeist. In dem unter dem oberen Drehzahlbereich liegenden Bereich (langsamere Drehzahlstufe, höhere Polzahl), nachfolgend als unterer Drehzahlbereich bezeichnet, ist Schalter 11 geschlossen und Schalter 10 geöffnet.

Zwischen dem Schalter 11 und dem Asynchronmotor 6 ist ein Spannungssteller 14 angeordnet. Der Spannungssteller 14 umfaßt eine der Anzahl der Leiter L4, L5,L6 des Hilfsbetriebenetzes 5 entsprechende Anzahl von Thyristor-Gruppen. Jede Thyristor- Gruppe besteht wiederum aus zwei zueinander antiparallel geschalteten Thyristoren. Jeder Leiter L4,L5,L6 des Hilfsbetriebenetzes 5 ist über eine Thyristor-Gruppe mit dem jeweils phasengleichen Anschluß für die langsamere Drehzahlstufe des Asynchronmotors verbunden. Uber den Spannungssteller 14 wird bei geschlossenem Schalter 11 und geöffnetem Schalter 10 die Nennspannung des Hilfsbetriebenetzes 5 abgesenkt und dadurch die Drehzahl des Asynchronmotors 6 im unteren Drehzahlbereich eingestellt.

Bei dem erfindungsgemäßen Lüfteraggregat kann damit die Drehzahl im unteren Drehzahlbereich wie mit einem Umrichter kontinuierlich, jedoch kostengünstiger geregelt werden. Im oberen Bereich, bei dem es auf die hohe Leistung ankommt, erfolgt eine stufige Drehzahlregelung.

Sind mehrere Ventilatoren eingesetzt, dann benötigen die weiteren Antriebsmotoren (in FIG 1 der Asynchronmotor 7 des Ventilators 9) keinen Spannungssteller mehr. Sie werden in der schnellen oder langsamen Drehzahlstufe betrieben (Schalter 12 oder 13 geschlossen) oder sind abgeschaltet.

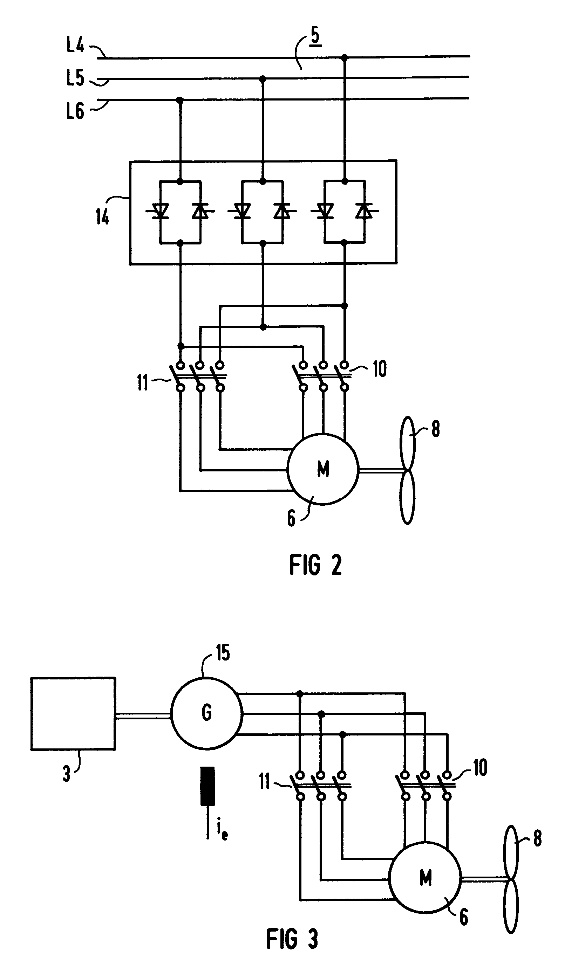

Bei Hilfsbetriebenetzen mit variabler Frequenz, bei denen die Spannung nicht oder nur sehr eingeschränkt verstellt werden kann, ist der Spannungssteller 14 gemäß FIG 2 an den Asynchronmotor 6 des Ventilators 8 anzuschließen.

Der Spannungssteller 14 ist wie in FIG 1 beschrieben aufgebaut. Jeder Leiter L4,L5 bzw.L6 des Hilfsbetriebenetzes 5 ist über eine Thyristor-Gruppe mit den jeweils phasengleichen Anschlüssen für die langsamere und die schnelle Drehzahlstufe des Asynchronmotors 6 verbunden. Durch den Spannungssteller 14 wird damit im oberen Drehzahlbereich ebenfalls eine Spannungsabsenkung erzielt. Dadurch erhält man dann in diesem Bereich die gewünschte frequenzproporionale Spannung.

Bei dem in FIG 3 dargestellten Ausführungsbeispiel wird der Asynchronmotors 6 des Ventilators 8 direkt von einem separaten Generator (Hilfsgenerator 15) gespeist, der ebenfalls von dem zu kühlenden Dieselmotor 3 angetrieben wird. Die erfindungsgemäße Regeleinrichtung wird in diesem Fall von dem Hilfsgenerator 15 gebildet, dessen Erregerstrom iₑ so geregelt wird, daß sich im oberen Drehzahlbereich des Asynchronmotors 6 (Schalter 10 geschlossen, Schalter 11 offen) die Spannung proportional mit der Frequenz des Hilfsgenerators 15 erniedrigt und im unteren Drehzahlbereich (Schalter 10 offen und Schalter 11 geschlossen) die Spannung über den Erregerstrom iₑ so weit abgesenkt wird, daß sich die gewünschte Drehzahl des Asynchronmotors 6 und damit des Ventilators 8 einstellt.

## Patentansprüche

1. Lüfteraggregat, das wenigstens einen polumschaltbaren Asynchronmotor zum Antrieb eines Ventilators umfaßt,
**dadurch gekennzeichnet**,
daß eine Regeleinrichtung (14,15) vorgesehen ist, durch die der Asynchronmotor (6,7) in einem vorgebbaren Drehzahlbereich durch eine Absenkung der Spannung in seiner Drehzahl stufenlos regelbar ist.

2. Lüfteraggregat nach Anspruch 1,
**dadurch gekennzeichnet**,
daß in einem Gesamtdrehzahlbreich des Asynchronmotors (6,7) ein vorgebbarer Bereich stufenlos und der restliche Bereich stufig in seiner Drehzahl einstellbar ist.

3. Lüfteraggregat nach Anspruch 2,
**dadurch gekennzeichnet**,
daß der Gesamtdrehzahlbereich einen vorgebbaren oberen und einen darunterliegenden unteren Drehzahlbereich umfaßt, wobei der obere Drehzahlbereich stufig und der untere stufenlos einstellbar ist.

4. Lüfteraggregat nach Anspruch 3, wobei der oder die polumschaltbaren Asynchronmotoren (6,7) von einem Hilfsbetriebenetz (5) mit Spannung versorgt werden,
**dadurch gekennzeichnet**,
daß die Regeleinrichtung wenigstens einen Spannungssteller (14) umfaßt, der zwischen dem Hilfsbetriebenetz (5) und einem der Asynchronmotoren (6) geschaltet ist und mit dem im unteren Drehzahlbereich die Spannung reduzierbar ist.

5. Lüfteraggregat nach Anspruch 3, wobei der oder die polumschaltbaren Asynchronmotoren (6,7) von einem Hilfsbetriebenetz (5) mit Spannung versorgt werden,
**dadurch gekennzeichnet**,
daß die Regeleinrichtung wenigstens einen Spannungssteller (14) umfaßt, der zwischen dem Hilfsbetriebenetz (5) und einem der Asynchronmotoren (6) geschaltet ist und mit dem im oberen und im unteren Drehzahlbereich die Spannung reduzierbar ist.

6. Lüfteraggregat nach Anspruch 4 oder 5,
**dadurch gekennzeichnet**,
daß der Spannungssteller (14) aus steuerbaren Halbleiter-Elementen besteht.

7. Lüfteraggregat nach Anspruch 6,
**dadurch gekennzeichnet**,
daß die steuerbaren Halbleiter-Elemente als Thyristoren, die mit Phasenanschnitt-Steuerung arbeiten, oder als Transistoren ausgebildet sind.

8. Lüfteraggregat nach Anspruch 3, wobei der oder die polumschaltbaren Asynchronmotoren (6,7) von wenigstens einem separaten Generator (15) mit Spannung versorgt werden,
**dadurch gekennzeichnet**,
daß die Regeleinrichtung von dem separaten Generator (15) gebildet ist, wobei die Spannung über den Erregerstrom (iₑ) des Generators (15) einstellbar und in der langsameren Drehzahlstufe soweit absenkbar ist, daß sich die gewünschte Ventilatordrehzahl einstellt.

9. Lüfteraggregat nach einem der Ansprüche 1 bis 8,
**dadurch gekennzeichnet**,
daß zum Antrieb des Ventilators (8,9) eine Asynchronmaschine mit Stromverdrängungsläufer vorgesehen ist.

10. Lüfteraggregat nach einem der Ansprüche 1 bis 9,
**dadurch gekennzeichnet**,
daß das Verhältnis der niedrigen zur höheren Polzahl 0,4 bis 0,8 beträgt.

## Claims

1. A fan installation which comprises at least one pole-changing asynchronous motor for driving a fan, characterised by the fact that a regulating device (14, 15) is provided by which the speed of rotation of the asynchronous motor (6, 7) is continuously adjustable in a predeterminable speed range by a decrease of the voltage.

2. A fan installation according to claim 1, characterised by the fact that, within a total speed range of the asynchronous motor (6, 7), the speed of rotation is adjustable continuously within a predeterminable range and stepwise within the rest of the range.

3. A fan installation according to claim 2, characterised by the fact that the total speed range comprises a predeterminable upper speed range and a lower speed range located below it, the upper speed range being adjustable stepwise and the lower speed range being adjustable continuously.

4. A fan installation according to claim 3 in which the pole-changing asynchronous motor or motors (6, 7) are supplied with voltage by an auxiliary operating supply (5), characterised by the fact that the regulating device comprises at least one voltage regulator (14) which is connected between the auxiliary operating supply (5) and one of the asynchronous motors (6) and by which the voltage can be reduced in the lower speed range.

5. A fan installation according to claim 3, in which the pole-changing asynchronous motor or motors (6, 7) are supplied with voltage by an auxiliary operating supply (5), characterised by the fact that the regulating device comprises at least one voltage regulator (14) which is arranged between the auxiliary operating supply (5) and one of the asynchronous motors (6) and by which the voltage in the upper and lower speed ranges can be reduced.

6. A fan installation according to claim 4 or 5, characterised by the fact that the voltage regulator (14) consists of controllable semiconductor elements.

7. A fan installation according to claim 6, characterised by the fact that the controllable semiconductor elements are developed as thyristors which operate with phase control or as transistors.

8. A fan installation according to claim 3 in which the pole-changing asynchronous motor or motors (6, 7) are supplied with voltage by at least one separate generator (15), characterised by the fact that the regulating device is formed by the separate generator (15), the voltage being adjustable via the exciter current (iₑ) of the generator (15) and being capable of being lowered to such an extent in the slower speed step that the desired fan speed of rotation is estabisbed.

9. A fan installation according to any of claims 1 to 8, characterised by the fact that an asynchronous machine with current displacement rotor is provided for driving the fan (8, 9).

10. A fan installation according to any of claims 1 to 9, characterised by the fact that the ratio of the low number of poles to the high number of poles is 0.4 to 0.8.

## Revendications

1. Ensemble ventilateur, qui comporte au moins un moteur asynchrone à pôles commutables, servant à entraîner un ventilateur, caractérisé par le fait qu'il est prévu un dispositif de régulation (14,15), au moyen duquel la vitesse de rotation du moteur asynchrone (6,7) peut être réglée progressivement dans une gamme prédéterminable de vitesses de rotation, au moyen d'une réduction de la tension.

2. Ensemble ventilateur suivant la revendication 1, caractérisé par le fait qu'une gamme prédéterminable peut être réglée dans une gamme globale de vitesses de rotation du moteur asynchrone (6,7) et que la vitesse de rotation du moteur peut être réglée progressivement dans le reste de la gamme.

3. Ensemble ventilateur suivant la revendication 2, caractérisé par le fait que l'ensemble de la gamme des vitesses de rotation comprend une gamme supérieure prédéterminable de vitesses de rotation et une gamme inférieure prédéterminable de vitesse de rotation, inférieure à la gamme précédente, la gamme supérieure de vitesses de rotation étant réglable par paliers, tandis que la gamme inférieure de vitesses de rotation est réglable progressivement.

4. Ensemble ventilateur suivant la revendication 3, dans lequel le ou les moteurs asynchrones (6,7) à pôles commutables sont alimentés en tension par un réseau de service auxiliaire (5), caractérisé par le fait que le dispositif de régulation comporte au moins un régulateur de tension (14), qui est branché entre le réseau de service auxiliaire (5) et l'un des moteurs asynchrones (6) et au moyen duquel la tension peut être réduite dans la gamme inférieure des vitesses de rotation.

5. Ensemble ventilateur suivant la revendication 3, dans lequel le ou les moteurs asynchrones (6,7) à pôles commutables sont alimentés en tension par un réseau de service auxiliaire (5), caractérisé par le fait que le dispositif de régulation comprend au moins un régulateur de tension (14), qui est branché entre le réseau de service auxiliaire (5) et l'un des moteurs asynchrones (6) et au moyen duquel la tension peut être réduite dans la gamme supérieure et dans la gamme inférieure des vitesses de rotation.

6. Ensemble ventilateur suivant la revendication 4 ou 5, caractérisé par le fait que le régulateur de tension (14) est constitué par des éléments à semiconducteurs commandables.

7. Ensemble ventilateur suivant la revendication 6, caractérisé par le fait que les éléments à semiconducteurs commandables sont réalisés sous la forme de thyristors, qui opèrent avec une commande à découpage de phase ou sous la forme de transistors.

8. Ensemble ventilateur suivant la revendication 3, dans lequel le ou les moteurs asynchrones (6,7) à pôles commutables sont alimentés en tension par au moins un générateur séparé (15), caractérisé par le fait que le dispositif de régulation est formé par le générateur séparé (15), la tension étant réglable par l'intermédiaire du courant d'excitation (iₑ) du générateur (15) et pouvant être réduite, dans l'étage de vitesses de rotation plus lentes, de manière à régler la vitesse de rotation désirée du ventilateur.

9. Ensemble ventilateur suivant l'une des revendications 1 à 8, caractérisé par le fait que pour l'entraînement du ventilateur (8,9), il est prévu un moteur asynchrone comportant un rotor à effet pelliculaire.

10. Ensemble ventilateur suivant l'une des revendications 1 à 9, caractérisé par le fait que le rapport du nombre réduit de pôles au nombre accru de pôles est compris entre 0,4 et 0,8.
